# EUROPEAN PATENT SPECIFICATION

(11) **EP 3 209 239 B1**
(45) Date of publication and mention of the grant of the patent: **23.12.2020**
(21) Application number: 14835689.2
(22) Date of filing: 18.11.2014
(51) Int. Cl.: A61C 11/02, A61C 11/06, A61C 11/00

(54) **ARTICULATOR - SEMIADJUSTABLE, ARCON**
HALBEINSTELLBARER ARTIKULATOR VOM ARCON-TYP
ARTICULATEUR SEMI-ADJUSTABLE DE TYPE ARCON

(30) Priority: 22.10.2014 BG 11184514
(43) Date of publication of application: 30.08.2017
(73) Proprietor: F ARTICULATOR DENT EOOD, 1421 Sofia (BG)
(72) Inventor: Filtchev, Andon Dimitrov, 1421 Sofia (BG)
(74) Representative: Vinarova, Emilia Zdravkova
(86) International application number: PCT/BG2014/000041
(87) International publication number: WO 2016/061644

(56) References cited:
- WO-A1-2014/146179
- CN-Y- 201 029 947
- FR-A- 1 075 074
- FR-A2- 2 498 924
- NL-A- 8 006 043

## Description

### FIELD OF THE INVENTION

The invention is about specifically constructed articulator semi-adjustable, arcon for dental medicine and dental technique and serves for is fixing and analyzing the working models, preparation of prosthetic constructions and reproduction of the lower mandible positions and movements versus the upper mandible, outside patient's oral cavity.

### BACKGROUND OF THE INVENTION

We have information about "Articulator' that is described in DE 195 30 157 A1;
containing the upper plate for fixing the maxillary working model and lower plate for fixing the mandibular working model. The articulator is partially adjustable (Semi-adjustable - SA) and could reproduce in terms of individual values not all but part of the basic lower mandible movements: opening and closing, protrusion, retrusion, laterotrusion, and mediotrusion - progressive lateral shifting.

The joint cavity in the mechanical joint is in the shape of rounded groove, which is located at the interior of the semi-circular body. Joint head of spherical shape fits in the joint cavity. At the front the articulator contains incisive pin and incisive platform with shaped up inclinations of incisive lead, on the left and on the right, versus the middle line. This articulator has the following shortcomings: both mechanical joints are interconnected at fixed distance; they are more massive and volumetric; in-between the lower and upper working plate there is greater distance thus hindering the connection of the working models to them; there is no fixing mechanical device that is supposed to maintain at the rear the intra-parallel upper and lower plate of the articulator; the incisive platform cannot rotate.

We have information about articulators (Semi-adjustable) that from "nonarcon" turned into "arcon" - articulator condilion. In the mentioned bibliography source N 2 is presented as Dentatus ARL (previous model - Nonarcon) was transformed into Dentatus ARA (new model- Arcon) and Hanau 96 H 20 (previous model -Nonarcon) was transformed into Hanau, H2 (new model - Arcon). In the cases of the two abovementioned articulators the mechanical joints in the new model are the same just like in the previous model, but with exchanged locations of the joint cavity and the joint head. The mechanical joints of the articulators arcon - Dentatus ARA and ofHanau, H2 correspond to the human temporomandibular joint: the joint head is located at the lower mandible, at articulator's lower shoulder correspondingly, and the joint cavity is at the upper mandible, at articulator's upper shoulder correspondingly, while in the case of nonarcon - the articulators Dentatus ARL and Hanau 96 H 20 is the opposite of the human temporomandibular joint: the joint head is at articulator's upper shoulder, and the joint cavity is at the lower shoulder and when operating them minimum inaccuracy is allowed. Thus their mechanical joints were reconstructed, in order to obtain the functional capacities of the arcon articulators.

The document FR 2 498 924 A2 discloses an articulator with lower and upper parts, the lower part being provided with an incisive platform at its front. The upper part being articulated on the lower part with two ball joints, the articulation system being provided with a locking mechanism.

There are various virtual articulators that are copies of the actually existing articulators with partial adjustability (Semi-adjustable). They are applied in the computer programs for preparing the dental prosthetic constructions according to the CAD/CAM technology. The dental prostheses are being constructed and modeled in the CAD device, via virtual juxtaposition between the virtual working models included in the virtual articulator. After completing their design they are sent to the CAM machine for milling them out of a ceramic or metal block.

We are searching for manners and means for: improving the capacities of this articulator class - "semi-adjustable, arcon"; cutting down the materials consumption; facilitating the operations performed with them; improving the accuracy and precision when preparing dental prostheses.

### SUMMARY OF THE INVENTION

The task of the invention is to create "Articulator - semi-adjustable, arcon", as its construction will include new details - articulator parts with which to improve its capacities.

The task of the invention is solved by articulator semi-adjustable, arcon, as defined in the claim, comprising a lower and upper parts that could be detached from each other or interconnected with two mechanical joints.

The lower part consists of a base, over which a working plate is located, with an incisive platform assembled at the front of said base, and at the rear the base is immovably connected to a vertical body, wherein a horizontal axis with two joint heads is fixed to said vertical body.

Two bodies of two joint cavities are adapted to said two joint heads of the horizontal axis, and said two bodies of the joint cavities are connected in the middle with a plank.

Said plank is immovably connected to an upper vertical body, which is connected at its front to an upper horizontal shoulder, under which a magnetically connected working plate is located.

An incisive pin is assembled at the front of the horizontal shoulder, so as to lean on the incisive platform.

The upper horizontal shoulder is immovably connected to an elevator that is fixed at the front of the upper vertical body, wherein said elevator is able to move up and down, until propping up an upper working model and connecting to it.

The upper vertical body and the vertical body are blocked and de-blocked, via an elbow, which ensures continuous inter-parallel location of the base and the upper horizontal shoulder during the process of operating the articulator.

The axis with the two joint heads could be extended and shortened.

Said movement of said axis with the two joint heads on the left and on the right being performed by an elastic element, inbuilt in said axis, and thus reproducing the immediate lateral shift in both mechanical joints.

This movement being reported at a scale, located in the middle of said axis at its rear.

The incisive platform could rotate and its inclination blocked with a special screw and reported on a_scale for the inclination of the incisive platform.

### BRIEF DESCRIPTION OF THE DRAWINGS

The invention "Articulator semi-adjustable, arcon" is described at the attached figures, where:
- figure 1 contains drawing of the articulator, of frontal and lateral view, with presented digital numbers of the details 1, 2, 3, 4, 5, 6, 7, 8, 9, 10, 11, 12, 16, 20;
- figure 2 presents the articulator of rear and lateral view, with presented digital numbers of the details 1, 2, 3, 4, 5, 6, 7, 8, 9, 10, 11, 12, 16, 20;
- figure 3 presents a section of miculator's mechanical joint, with the following numbered details 2, 3, 9, 12, 14, 17, 19;
- figure 4 presents a section of articulator's mechanical joints with the following numbered details 10, 15, 18;
- figure 5 is the drawing of the projection of incisive pin 7 and of the incisive platform 8;
- figure 6 presents the prototype of "Articulator semi-adjustable, arcon", of lateral view with descended elevator 4;
- figure 7 is the prototype of figure 6 of "Articulator semi-adjustable, arcon", of lateral view with ascended elevator 4;
- figure 8 is the prototype of figure 6 of "Articulator semi-adjustable, arcon", disassembled in three parts: lower part 21, elbow 13 and upper part 22.

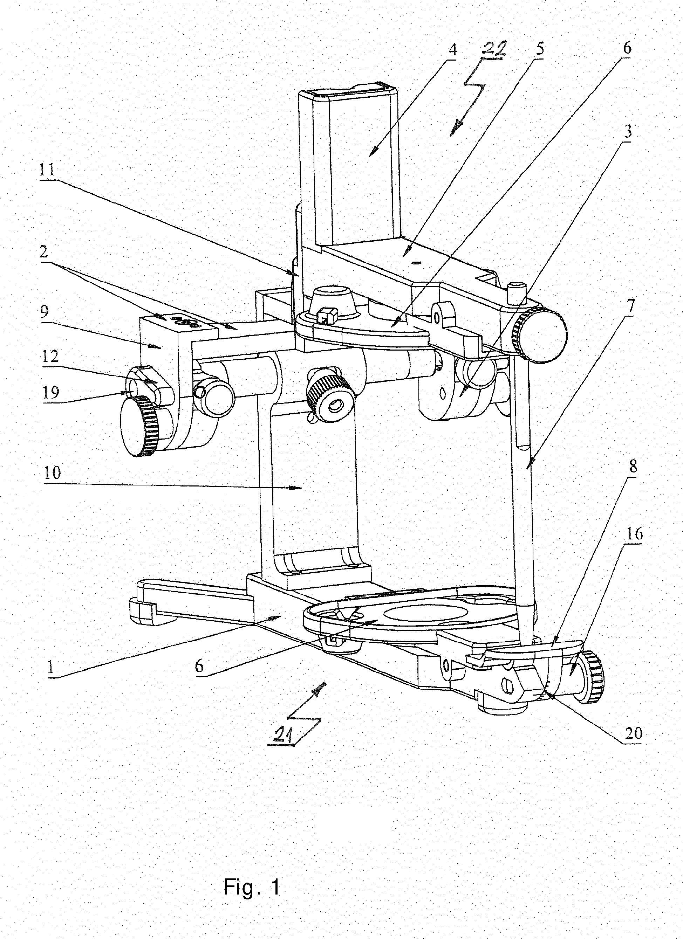

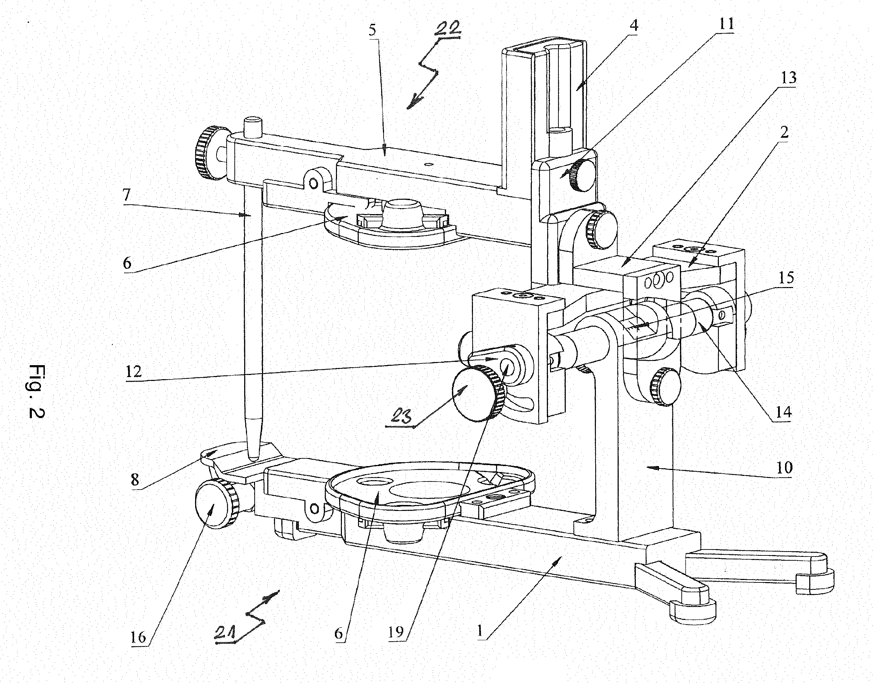

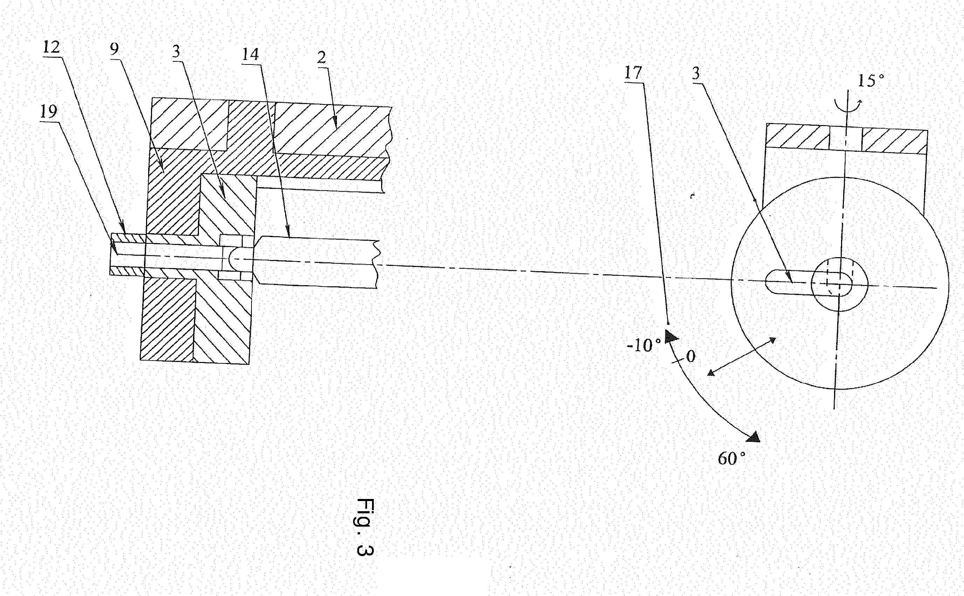

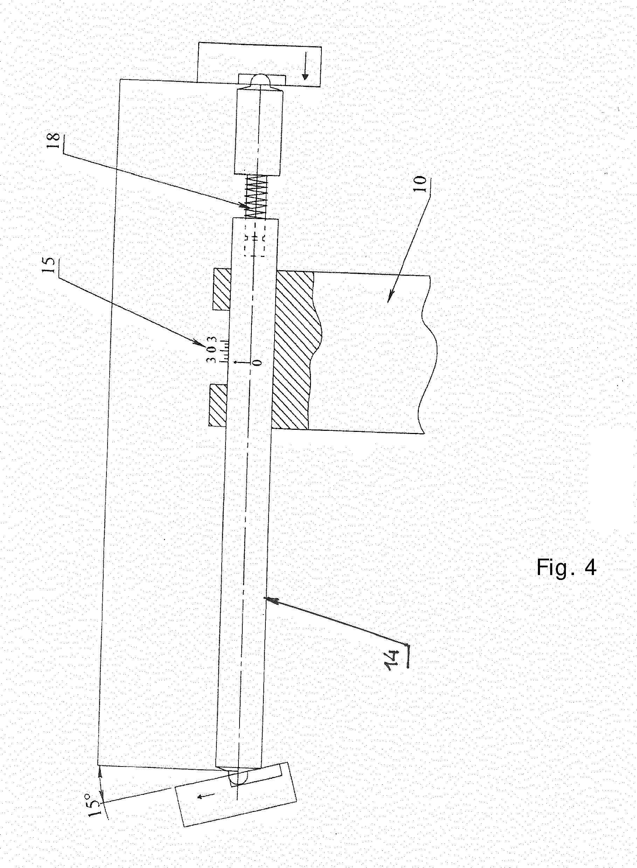

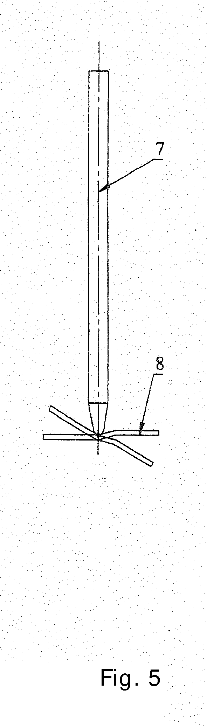

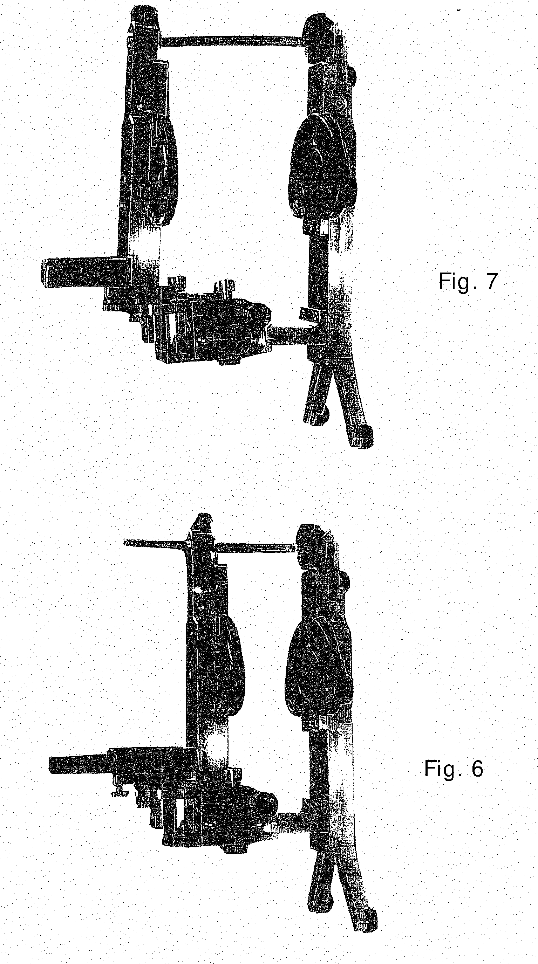

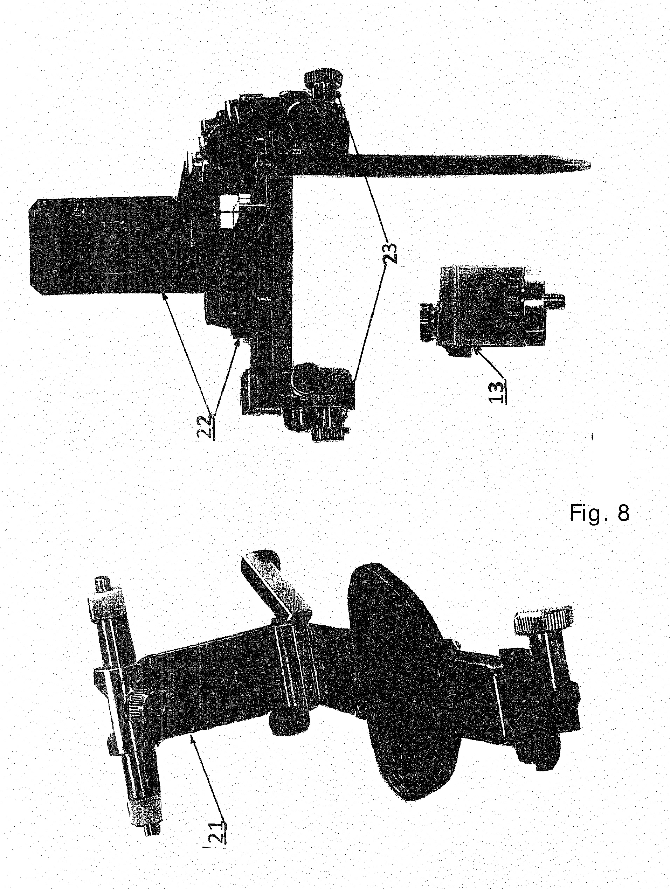

Description of the details designated at figure 1, 2, 3, 4, 5, 6, 7, 8: 1 - base; 2-plank; 3 - body of the joint cavity; 4 - elevator; 5 - upper horizontal shoulder; 6 - working plate; 7 - incisive pin; 8 - incisive platform; 9 - joint cavity carrier; 10 - vertical body; 11 - upper vertical body; 12 - pawl; 13 - elbow; 14-joint head axes; 15 - scale of axis lateral shift; 20 - special screw; 17 - scale for the inclination of the protrusion (sagittal) condyle path; 18 - elastic element; 19 - fixator; 16 - scale for the inclination of the incisive platform; 21- lower part; 22 - upper part; 23 - screw.

### EXAMPLES OF PERFORMANCE

Articulator semi-adjustable, arcon comprises base 1 over which working plate 6 is located. At the front, incisive platform 8 is assembled on the base 1. At the rear the base 1 is immovably connected to vertical body 10, to which horizontal axis with two joint heads 14 is fixed. In the middle of the axis, at the rear, scale 15 is outlined for reporting the axis lateral shift on the left and on the right and elastic element 18 is inbuilt. The axis with the two joint heads 14 is movably fixed, with the blocking capability, with the aid of fixator 19 to concave longitudinal groove, one on the left and one on the right that is located inside the body of the joint cavity 3. In the upper part on the outside of both bodies of the joint cavities 3, on the left and on the right pawl 12 and screw 23 are located with which to regulate the scale for the inclination of the protrusion (sagittal) condyle path 17, located at the joint cavity carrier 9. Both bodies of the joint cavities 3 are connected with plank 2 in the middle that in turn is immovably connected to the upper vertical body 11, which at the front is connected to the upper horizontal shoulder 5, under which the magnetically connected working plate 6 is located. At the front of the upper horizontal shoulder incisive pin 7 is assembled that leans at incisive platform 8.

The vertical body 10 and the upper vertical body 11 at the rear could be immovably blocked and de-blocked via elbow 13. At the front of the upper vertical body 11 an elevator 4 is adapted.

### OPERATING OF THE ARTICULATOR SEMI-ADJUSTABLE, ARCON

The lower mandible working model is fixed for example with gypsum and centered at working plate 6, which is magnetically connected to base 1 in a manner that results in model's middle line and articulator's middle line coinciding and the chewing plane of the model could be horizontally located at the work bench. The upper mandible model is juxtaposed to the lower mandible working model in central position. Along the upper mandible working model minimum gypsum quantity and the working plate 6 are placed, as the latter is magnetically connected to the upper horizontal shoulder 5, which is immovably connected to elevator 4, fixed at the front of the upper vertical body 11 and capable of moving up and down until propping up the upper working model and connecting to it. Vertical body 10 is immovably connected to base 1, and the upper vertical body 11 is immovably connected on one hand to the upper horizontal shoulder 5, and on the other hand to plank 2, which is immovably connected to carrier 9, to which the body of the joint cavity 3 is connected, one on the left and one on the right. Vertical body 10 and upper vertical body 11 could be blocked and de-blocked via elbow 13 thus the base 1 and the upper horizontal shoulder 5 could remain in continuous inter-parallel location while operating the articulator. In the middle of the axis with the two joint heads 14 scale 15 is outlined at the rear for reporting the lateral shift on the left and on the right, and this extension and shortening movement could be performed by the elastic element 18, inbuilt in the axis with the two joint heads 14, which are adapted to both bodies of the joint cavities 3 and via the fixator 19 they could be blocked in central position or perform opening and closing movement, in retrusion, laterotrusion and mediotrusion, with the reproduction of progressive and immediate lateral shift, as well as opportunity for detaching the lower 21 from the upper 22 parts of the articulator and fixing them once again with the pawl 12. With screw 23 you could fix the inclination of the protmsion (sagittal) condyle path according to scale 17, which is located at the external side of carrier 9. The incisive platform 8 being propped up by the incisive pin 7 is assembled at the front of base 1 and it could rotate, as its inclination could be blocked with special screw 16 and reported at scale 20.

The advantage of Articulator semi-adjustable, arcon is that the operations with it are facilitated, materials consumption is lowered and the accuracy and precision of the prepared dental prostheses are improved.

## Claims

1. Articulator - semi-adjustable, arcon, comprising
a lower and upper parts (21, 22) that could be detached from each other or interconnected with two mechanical joints,
the lower part 21 consists of a base (1), over which a working plate (6) is located, with an incisive platform (8) assembled at the front of said base (1), and at the rear the base (1) is immovably connected to a vertical body (10), wherein an horizontal axis with two joint heads (14) is fixed to said vertical body (10),
wherein two bodies (3) of two joint cavities are adapted to said two joint heads (14) of the horizontal axis,
and said two bodies (3) of the joint cavities are, connected in the middle with a plank (2),
said plank (2) is immovably connected to an upper vertical body (11), which is connected at its front to an upper horizontal shoulder (5), under which a magnetically connected working plate (6) is located,
an incisive pin (7) is assembled at the front of the horizontal shoulder (5), so as to lean on the incisive platform (8),
the upper horizontal shoulder (5) is immovably connected to an elevator (4) that is fixed at the front of the upper vertical body (11),
wherein said elevator (4) is able to move up and down,
until propping up an upper working model and connecting to it,
wherein the upper vertical body (11) and the vertical body (10), are blocked and de-blocked, via an elbow (13), which ensures continuous inter-parallel location of the base (1) and the upper horizontal shoulder (5) during the process of operating the articulator.
wherein the axis with the two joint heads (14) could be extended and shortened,
said movement of said axis with the two joint heads (14) on the left and on the right being performed by an elastic element (18), inbuilt in said axis thus reproducing the immediate lateral shift in both mechanical joints,
and this movement being reported at a scale (15), located in the middle of said axis at its rear, wherein the incisive platform (8), could rotate and its inclination blocked with a special screw (16) and reported on a scale (20) for the inclination of the incisive platform (8).

## Patentansprüche

1. Artikulator - halbverstellbar, Arcon, bestehend aus einem unteren und einem oberen Teil (21, 22), die voneinander gelöst oder mit zwei mechanischen Gelenken verbunden werden können, Der untere Teil 21 besteht aus einer Basis (1), über der sich eine Arbeitsplatte (6) befindet, wobei eine Schneideplattform (8) vorne an der Basis (1) und hinten an der Basis (1) angebracht ist. ist unbeweglich mit einem vertikalen Körper verbunden (10), wobei eine horizontale Achse mit zwei Gelenkköpfen (14) an dem vertikalen Körper (10) befestigt ist, wobei zwei Körper (3) von zwei Gelenkhohlräumen an die zwei Gelenkköpfe (14) der horizontalen Achse und die beiden Körper angepasst sind (3) der Gelenkhohlräume sind in der Mitte mit einer Planke (2) verbunden, wobei die Planke (2) unbeweglich mit einem oberen vertikalen Körper (11) verbunden ist, die an ihrer Vorderseite mit einer oberen horizontalen Schulter (5) verbunden ist, unter der sich eine magnetisch verbundene Arbeitsplatte (6) befindet, Ein Schneidestift (7) ist an der Vorderseite der horizontalen Schulter (5) angebracht, so dass die obere horizontale Schulter (5) unbeweglich mit einem Aufzug (4) verbunden ist, der fest ist, um sich auf die Schneideplattform (8) zu stützen an der Vorderseite des oberen vertikalen Körpers (11), wobei sich der Aufzug (4) in der Lage ist, sich auf und ab zu bewegen, bis ein oberes Arbeitsmodell gestützt und mit diesem verbunden ist, wobei der obere vertikale Körper (11) und der vertikale Körper (10) über eine blockiert und entblockiert sind Ellbogen (13), dies gewährleistet eine kontinuierliche interparallele Position der Basis (1) und der oberen horizontalen Schulter (5) während des Betriebs des Artikulators, wobei die Achse mit den beiden Gelenkköpfen (14) verlängert und verkürzt werden könnte, wobei die Bewegung des genannten Achse mit den beiden Gelenkköpfen (14) links und rechts von einem elastischen Element (18) ausgeführt, in die Achse eingebaut, wodurch die unmittelbare seitliche Verschiebung in beiden mechanischen Gelenken reproduziert wird, und diese Bewegung wird in einer Skala (15) gemeldet, die sich in der Mitte der Achse auf ihrer Rückseite befindet, wobei sich die Schneideplattform (8) drehen könnte und ihre Neigung wurde mit einer speziellen Schraube (16) blockiert und auf einer Skala (20) für die Neigung der Schneideplattform angegeben (8).

## Revendications

1. Articulateur - semi-réglable, arcon, comprenant une partie inférieure et supérieure (21, 22) qui pourraient être détachées l'une de l'autre ou interconnectées avec deux articulations mécaniques, la partie inférieure 21 se compose d'une base (1), sur laquelle une plaque de travail (6) est située, avec une plate-forme incisive (8) assemblée à l'avant de ladite base (1), et à l'arrière la base (1) est reliée de manière inamovible à un corps vertical (10), dans lequel un axe horizontal avec deux têtes d'articulation (14) est fixé audit corps vertical (10), dans lequel deux corps (3) de deux cavités d'articulation sont adaptés auxdites deux têtes d'articulation (14) de l'axe horizontal, et lesdits deux corps (3) des cavités d'articulation sont, reliées au milieu avec une planche (2), ladite planche (2) est reliée de manière inamovible à un corps vertical supérieur (11), qui est relié à son avant à un épaulement horizontal supérieur (5), sous lequel une plaque de travail (6) connectée magnétiquement est située, une broche incisive (7) est assemblée à l'avant de l'épaulement horizontal (5), de manière à s'appuyer sur la plate-forme incisive (8), l'épaulement horizontal supérieur (5) est relié de manière inamovible à un élévateur (4) qui est fixé à l'avant du corps vertical supérieur (11), dans lequel ledit élévateur (4) peut se déplacer vers le haut et vers le bas, jusqu'à soutenir un modèle de travail supérieur et s'y connecter, dans lequel le corps vertical supérieur (11) et le corps vertical (10) sont bloqués et débloqués, via un coude (13), ce qui assure un emplacement inter-parallèle continu de la base (1) et de l'épaulement horizontal supérieur (5) pendant le processus de fonctionnement de l'articulateur, dans lequel l'axe avec les deux têtes d'articulation (14) pourrait être prolongé et raccourci, ledit mouvement dudit axe avec les deux têtes d'articulation (14) à gauche et à droite étant réalisé par un élément élastique (18), intégré dans ledit axe reproduisant ainsi le décalage latéral immédiat des deux articulations mécaniques, et ce mouvement étant reporté à une échelle (15), située dans le milieu dudit axe à son arrière, dans lequel la plate-forme incisive (8) pourrait tourner et son inclinaison bloquée avec une vis spéciale (16) et reportée sur une échelle (20) pour l'inclinaison de la plate-forme incisive (8).
